# EUROPÄISCHE PATENTSCHRIFT

(11) **EP 2 011 637 B1**
(45) Veröffentlichungstag und Bekanntmachung des Hinweises auf die Patenterteilung: **10.02.2010**
(21) Anmeldenummer: 06026374.6
(22) Anmeldetag: 19.12.2006
(51) Int. Cl.: B32B 1/00, B32B 15/04, B32B 15/14, B32B 15/20, G02B 5/22

(54) **Laserschutzvorrichtung**
Laser protection
Laser protection

(43) Veröffentlichungstag der Anmeldung: 07.01.2009
(73) Patentinhaber: FRENZELIT-WERKE GMBH & CO. KG, 95460 Bad Berneck (DE)
(72) Erfinder: Wirth, Wolfgang, Dipl.-Ing., 95445 Bayreuth (DE); Schrei, Reiner, 96123 Litzendorf (DE)
(74) Vertreter: Becker, Eberhard

(56) Entgegenhaltungen:
- US-A- 5 985 385

## Beschreibung

### Technisches Gebiet

Die vorliegende Erfindung betrifft eine Laserschutzvorrichtung in Form eines flexiblen Flächengebildes, welche der Schutzstufe A5 oder besser gemäß der Europäischen Norm EN 12254:1998 genügt. Diese kann in Form eines Laserschutzvorhangs oder als Bekleidungsstück, beispielsweise in Form von Schutzhandschuhen oder -schürzen ausgefertigt sein.

### Stand der Technik

Die Internationale Norm IEC 60825-1:1998 legt die maximal zulässige Bestrahlung von Auge und Haut fest. Damit diese bei der Arbeit mit Laserstrahlung nicht überschritten wird, formuliert die europäische Norm EN 12254:1998 sicherheitstechnische Anforderungen an Abschirmungen an Laserarbeitsplätzen, an denen Laserstrahlung mit maximal 100 W mittlerer Leistung oder 30 J Einzelimpulsenergie im Spektralbereich von 180 nm bis 10⁶ nm eingesetzt wird. Diese werden in Schutzstufen von A1 bis A10 unterteilt. Während flexible Laserschutzvorrichtungen, die niedrigen Schutzstufen genügen, im Stand der Technik bekannt sind, können hohe Schutzstufen meist nur unter Verwendung starrer Materialien, wie beispielsweise Stahlplatten, verwirklicht werden. Die Schutzstufe A5 ist in der europäischen Norm EN 12254:1998 beispielsweise so definiert, dass der maximale spektrale Transmissionsgrad bei den für die Prüfung verwendeten Laserwellenlängen τ(λ) = 10⁻⁵ beträgt. Die mittleren Leistungs- (*E*) und Energiepulsenergiedichte (*H*) zur Prüfung der Schutzwirkung und der Beständigkeit gegen Laserstrahlung in verschiedenen Wellenlängenbereichen wird in Tabelle 1 aufgeführt:

| Wellenlängenbereich | Prüfbedingung/Impulsdauer | | Mittlere Leistungs- (*E*) und Einzelenergieimpulsdichte (*H*) | | |
|---|---|---|---|---|---|
| 180 nm - 315 nm | D | > 0,25 | *E*_{D} | [W/m²] | 10² |
| | I, R | > 10⁻⁹ bis 0,25 | *H*_{1,R} | [J/m²] | 3 · 10⁶ |
| | M | ≤10⁻⁹ | *E*_{M} | [W/m²] | 3 · 10¹⁵ |
| > 315 nm - 1050 nm | D | >5-10⁻³ | *E*_{D} | [W/m²] | 10⁵ |
| > 1050 nm - 1400 nm | D | > 2· 10⁻³ | *E*_{D} | [W/m²] | 2,5 · 10⁶ |
| > 315nm - 1400 nm | I, R | > 10⁻⁹ bis 0,01 | *H*_{1,R} | [J/m²] | 5 · 10² |
| | M | ≤ 10⁻⁹ | *H*_{M} | [J/m²] | 15 |
| > 1400 nm bis 10⁶ nm | D | > 0,1 | *E*_{D} | [W/m²] | 10⁸ |
| | I, R | > 10⁻⁹ bis 0,1 | *H*_{1,R} | [J/m²] | 10⁷ |
| | M | ≤10⁻⁹ | *E*_{M} | [W/m²] | 10¹⁶ |
| Die Prüfbedingungen und entsprechende Laserbezeichnung lauten: | | | | | |
| D (Dauerstrich-(CW)Laser): ein Impuls mit einer Impulsdauer von 100 s, | | | | | |
| I (Impulslaser): 1000 Impulse mit einer Impulsdauer von 10⁻⁶ bis 10⁻² s, | | | | | |
| R (Riesenimpulslaser): 1000 Impulse mit einer Impulsdauer von 10⁻⁹ bis 10⁻⁶ s, | | | | | |
| M (Modengekoppelter Laser): 100 000 Impulse mit einer Impulsdauer von ≤ 10⁻⁹ s. | | | | | |

Die Abschirmungen dürfen ihre Schutzeigenschaft nicht verlieren und müssen unter dem Einfluss von Laserstrahlung bei den in Tabelle 1 angegebenen Leistung- bzw. Energiedichten in ihrer Schutzstufe bleiben und dürfen keine induzierte Transmission zeigen. Sie müssen die Anforderungen an ihre Schutzeigenschaften auch nach einer Bestrahlungszeit von 50 h mit UV-Licht entsprechend Abschnitt 6 der europäischen Norm EN 168:1995 erfüllen. Die Abschirmungen müssen die Anforderungen auch nach 5 h Lagerung in einer Klimakammer bei einer Temperatur von (55 ± 2) °C und einer relativen Luftfeuchte von mindestens 95 % und darauf folgender Lagerung bei Zimmertemperatur für eine Dauer von 2 h erfüllen. Flexible Abschirmungen müssen zudem eine Zugkraft von 15 N/m² für eine Dauer von 10 s aushalten ohne zu reißen. Des Weiteren müssen sie bei einer Prüfung auf Entflammbarkeit nach Abschnitt 3.4 der Europäischen Norm EN 1598:1997 die Anforderungen nach Abschnitt 4.4 von EN 1598:1997 erfüllen.

Die wichtigsten Industrielaser sind der Nd:YAG-Feststofflaser und der CO₂-Laser. Während sich die Strahlung eins CO₂-Lasers relativ einfach, beispielsweise mittels einer Aluminumfolie, abschirmen lässt, ist dies auf Grund der Laserwellenlänge von 1064 nm beim Nd:YAG-Laser mit Problemen behaftet. Er ist daher vom Standpunkt der Abschirmung her der kritischere.

Eine flexible Laserschutzvorrichtung ist in EP 0 247 797 A2 beschrieben. Sie besteht aus einer Gewebeschicht, welche mit einer Schicht eines Klebemittels auf einer Metallschicht aufgebracht ist. Diese Laserschutzvorrichtung erreicht jedoch maximal Schutzstufe A4 gemäß der europäischen Norm EN 12254:1998 gegenüber Laserstrahlung der Wellenlänge 1064 nm im Dauerstrichmodus.

Das noch nicht offengelegte deutsche Gebrauchsmuster Nr. 20 2006 006 823.6 offenbart eine flexible Laserschutzvorrichtung, welche aus mindestens einer Lage eines nicht brennbaren textilen Flächengebildes als Träger und mindestens auf einer Seite dieser Lage aufgebrachten Folienwerkstofflage, die auf ihrer nach außen gewandten Seite mindestens eine, mittels eines thermischen Beschichtungsverfahrens aufgebrachte, Metall- oder oxid-keramische Beschichtung aufweist. Diese Laserschutzvorrichtung erreicht jedoch ebenfalls maximal Schutzstufe A4 gemäß der europäischen Norm EN 12254:1998 gegenüber Laserstrahlung der Wellenlänge 1064 nm im Dauerstrichmodus.

Eine erhöhte Schutzwirkung gegenüber den oben beschriebenen Laserschutzvorrichtungen weist die Vorrichtung gemäß der DE 41 13 668 C2 auf. Diese beschreibt eine flexible Laserschutzvorrichtung, welche mindestens eine Lage eines mechanisch befestigten Vlieses aus Kohlenstofffasern, eine nichtbrennbare Gewebelage aus Meta-Aramidfasern und eine weitere, nicht brennbare Gewebelage aus einem Fasergemisch von preoxidierten Fasern und Para-Aramidfasern umfasst. Diese Laserschutzvorrichtung erreicht gemäß der europäischen Norm EN 12254: 1998 folgende Schutzstufen:

| Wellenlängenbereich | Prüfbedingungen | Schutzstufe |
|---|---|---|
| 180nm-315nm | D | A9 |
| | R | A2 |
| >315nm - 1050nm | D | A7 |
| > 1050 nm - 1400 nm | D | A6 |
| > 315nm - 1400nm | I, R | A6 |
| > 1400 nm bis 10600 nm | D | A3 |
| | I | A4 |

Die Laserschutzvorrichtung gemäß der DE 41 13 668 C2 ist jedoch sehr dick und demnach nur eingeschränkt flexibel, sowie teuer in der Herstellung.

Ein Beispiel für eine Vorrichtung zum Schutz gegen Feuer und Hitze, ist in US 5,985, 385 offenbart. Sie umfasst eine innere Schicht, welche aus mit Wasser gefüllten Schläuchen zur Ableitung von Wärme besteht, nacheinander umgeben von einer feuerfesten Schicht, einer Metallfolie und einem Glasfasergewebe als Außenschicht. Die Vorrichtung ist schlauchförmig ausgeführt und dient dem Schutz von Rohrkabeln, Kabelpritschen, Hochspannungsleitungen, Kabeln und anderen Vorrichtungen zur Übertragung elektrischer Energie oder Signale. Eine Schutzwirkung gegenüber Laserstrahlung wird nicht offenbart.

### Beschreibung der Erfindung

Die Aufgabe der vorliegenden Erfindung besteht darin, eine kostengünstige, robuste und gleichzeitig flexible Laserschutzvorrichtung zu entwickeln, welche vor allem die beiden wichtigen Industrielaser Nd:YAG und CO₂ mit einem Schutzvorrichtungskonzept abdeckt. Während CO₂-Laserstrahlung relativ einfach, beispielsweise mittels einer Aluminiumfolie abgeschirmt werden kann, ist es auf Grund der Wellenlänge beim Nd:YAG-Laser schwierig, eine Laserschutzvorrichtung bereitzustellen, welche der Schutzstufe A5 oder besser gemäß der Europäischen Norm EN 12254:1998 genügt.

Diese Aufgabe wird erfindungsgemäß durch eine Laserschutzvorrichtung in Form eines flexiblen Flächengebildes gelöst, welches einen Mehrschichtverbund aus einer ersten Schicht, umfassend mindestens eine Aluminiumfolienlage, sowie wenigstens einer weiteren Schicht aus mindestens eine Lage Glasmaterials aus Silikatfaser-Glasgewebe und/oder Silikatfaser-Glasvlies und/oder Silikatfaser-Glaspapier enthält, wobei die erste Schicht auf der dem Laser abgewandten Seite angeordnet ist, falls nur eine einzige Schicht aus wenigstens einer Lage Glasmaterial im Mehrschichtverbund vorhanden ist

Normale E-Glasgewebe versagen bei Leistungen von Nd:YAG-Lasern der Schutzstufe A5 sofort. Bei Silikatgeweben kommt es jedoch, begründet durch die Zusammensetzung, im Gegensatz zu normalen E-Glasfasern nur zu einer geringen Absorption von Laserstrahlung. Dieser Effekt beruht in erster Linie auf diffuser Reflexion und Streuung der Energie, ohne dass durch den absorbierten Energieanteil die Erwärmung des Gewebes einen kritischen Punkt erreicht.

Silikatfasern werden üblicherweise hergestellt, indem in einem Dünnziehverfahren Fasern hergestellt werden, die einen beträchtlichen Anteil (z.B. 20 %) an leicht chemisch herauslösbaren Oxiden, wie beispielsweise Natriumoxid oder auch Boroxid, aufweisen. Diese Oxide werden dann in einem zweiten Schritt mittels Säureextraktion herausgelöst. Als Folge erhält man Fasern, die einen SiO₂-Gehalt von bis zu 99 % aufweisen.

Die Fasern können dann in Form von Garnen zu Geweben verwebt werden. Es ist auch möglich durch Vernadelung langer Fasern Vliese herzustellen. Weiterhin können mit Hilfe eines Nassverfahrens kurzfaserige Vliese bzw. Papiere hergestellt werden.

Für den Aufbau einer Laserschutzvorrichtung ist es notwendig, den durch das Gewebe, Vlies oder Papier transmittierten Strahlungsanteil, wie auch die Streustrahlung nach außen hin abzuschirmen. Deshalb wird das Silikatgewebe, -vlies oder -papier mit einer Aluminiumfolie auf der dem Laser abgewandten Seite kombiniert. Die Aluminiumfolie hat den Vorteil, dass sie hochreflektiv ist und der Laserstrahl nur sehr schlecht einkoppelt.

Sobald die Temperatur auf der Alufolie in die Nähe bzw. über den Schmelzpunkt von ca. 650°C für Aluminium kommt, führt dies zum schlagartigen Durchbrennen des kompletten Aufbaus aus Folie und Gewebe. Verantwortlich hierfür sind allem Anschein nach Aluminiumdämpfe/-partikel die sich auf dem Gewebe niederschlagen und zu einem extremen Anstieg der Absorption und damit zum Schmelzen des Gewebes führen. Es macht aus diesem Grund keinen Sinn die Aluminiumfolie auf der dem Laser zugewandten Seite zu postieren.

Andere Folien aus Edelmetallen wie Silber oder Gold oder andere Metallfolien mit einer entsprechenden Beschichtung sind denkbar, aber nicht wirtschaftlich. Edelstahl und auch Kupferfolien zeigen dagegen eine sehr hohe Einkoppelung, was den vermeintlichen Vorteil des höheren Schmelzpunkts zunichte macht.

Es ist vorteilhaft, wenn das Glasgewebe, Glasvlies oder Glaspapier vorgeschrumpft ist. Dies erfolgt, indem das, in der amorphen Struktur des Glasmaterials enthaltene Wasser (ca. 10 %) ausgetrieben wird. Die Struktur heilt dadurch aus und wird homogen und dadurch sehr blickdicht, zudem verringert sich offensichtlich die Absorption bei 1064 nm.

In einer bevorzugten Ausführungsform ist das vorgeschrumpfte Material formschlüssig auf der Aluminiumfolie aufgebracht.

Bei nicht symmetrisch aufgebauten Abschirmungen kann es trotz normgerechter Kennzeichnung der dem Laser zugewandten Seite, bei der Montage zum Vertauschen der Seite kommen. Dies kann im Ernstfall zu fatalen Schäden wie z.B. Brände aber auch zu Personenschäden führen. Die erfindungsgemäße Laserschutzvorrichtung erreicht auch dann die Schutzstufe A5 gegenüber Nd:YAG-Lasern im Dauerstrichmodus, wenn man die dem Laser abgewandte Seite der Aluminiumfolie mit einer zusätzlichen Lage Silikatgewebe, -vlies oder -papier kombiniert. In einer bevorzugten Ausführungsform ist die erfindungsgemäße Laserschutzvorrichtung deshalb dadurch gekennzeichnet, dass die Schicht, welche mindestens eine Lage Aluminiumfolien enthält, auf beiden Seiten je eine formschlüssig aufgebrachte Lage aus vorgeschrumpftem Material aufweist. Der Aufbau ist dann symmetrisch und somit sicher vor Fehlern bei der Montage. Eine zusätzliche Gewebe-, Vlies oder Papierlage auf einer Seite ist auf Grund eines dann entstehenden Wärmestaus in Verbindung mit der Verwechslungsgefahr keine zusätzliche Option. Bei einer Verdoppelung der Gewebe, Vlies oder Papierlagen von zwei auf vier Lagen, wobei der symmetrische Aufbau beibehalten wird kommt es, unter den Testbedingungen für Schutzstufe A5 gegenüber Nd:YAG-Lasern im Dauerstrichmodus bei Verwendung von Geweben mit einem Gewicht von 600g/cm² und mehr, zu sofortigen Versagen der Laserschutzvorrichtung. Bei wesentlich leichteren Geweben, Vliesen oder Papieren muss dies nicht zwingend der Fall sein.

In einer weiteren bevorzugten Ausführungsform sind die Lagen der Aluminiumfolie und des vorgeschrumpften Materials nur an den Außenrändern miteinander verbunden, um die Bildung von Abbauprodukten von beispielsweise einem Kaschierkleber während der Bestrahlung zu verhindern, die zu einer erhöhten Absorption führen können, was wiederum zu einem vorzeitigen Versagen führen kann.

Die Anzahl und Dicke der Aluminiumfolien beeinflusst vor allem die Flexibilität des Vorhangs und beeinflusst die Leistungsfähigkeit des Vorhangs hinsichtlich der Widerstandsfähigkeit gegenüber der Laserstrahlung von Nd:YAG-Lasern, wegen oben erwähnter Gefahr des Durchbrennens der erfindungsgemäßen Laserschutzvorrichtung beim Schmelzen der Folie, nur geringfügig. Dies ändert sich jedoch, wenn man mit ein und derselben Schutzvorrichtung einen Schutz gegen alle Typen von Laserquellen haben möchte. Insbesondere gegenüber CO₂-Lasern ist die Aluminiumfolie von sehr großer Bedeutung und muss dementsprechend ausgelegt werden. Die Aluminiumfolie ist deshalb bevorzugt genarbt. Weiterhin weist sie bevorzugt eine Dicke von bevorzugt 10 bis 100 µm, besonders bevorzugt von 20 bis30 µm auf.

Das vorgeschrumpfte Material besteht bevorzugt zu 100 % aus Silikatfasern, die durch eine chemisch Behandlung erhalten werden. Es weist ein Gewicht von bevorzugt 50 bis 1500 g/m², besonders bevorzugt von 600 bis 1100 g/m² auf.

Es ist wichtig, dass die Oberfläche des vorgeschrumpften Glasgewebes möglichst glatt und möglichst blickdicht ist. Bevorzugt weist das vorgeschrumpfte Glasgewebe deshalb eine möglichst blickdichte Bindung auf, bei der es sich besonders bevorzugt um eine Atlasbindung handelt.

Weiterhin ist es entscheidend, dass die Oberfläche der erfindungsgemäßen Laserschutzvorrichtung frei von Verunreinigungen bzw. Beschichtungen ist, die den Laserstrahl zu stark absorbieren. Metalloxide wie auch mineralische Verbindungen wie beispielsweise Vermiculite führen zum sofortigen Versagen.

In einer weiteren bevorzugten Ausführungsform enthält die erfindungsgemäße Laserschutzvorrichtung eine Ausrüstung des vorgeschrumpften Materials zur Verbesserung der Schnittfestigkeit. Diese ist beispielsweise für die Konfektion der erfindungsgemäßen Laserschutzvorrichtung notwendig. Besonders bevorzugt handelt es sich dabei um eine Ausrüstung auf Basis von Kieselsol. Eine wasserbasierende Flotte auf Basis von Kieselsol mit einem geringen Anteil eines polymeren Bindemittelsystems hat sich als vorteilhaft erwiesen. Dieses Bindemittelsystem sollte bei der Wellenlänge des Lasers möglichst transparent sein.

In einer weiteren bevorzugten Ausführungsform ist die erfindungsgemäße Laserschutzvorrichtung durch eine schwer entflammbare Schutzhülle gegen Verschmutzung geschützt, um der oben erwähnten Gefahr des Versagens bei Verunreinigung der erfindungsgemäßen Laserschutzvorrichtung zu begegnen. Die Schutzhülle hüllt die Laserschutzvorrichtung vollständig ein. Sie kann je nach Bedarf aus schwer entflammbaren Geweben oder aber auch aus schwer entflammbaren, geeigneten Kunststofffolien bestehen. Wichtig ist nur, dass keine Abbauprodukte bei Bestrahlung entstehen, die sich auf dem vorgeschrumpften Material niederschlagen und gleichzeitig zu einer erhöhten Absorption führen. In einer besonders bevorzugten Ausführungsform besteht die Schutzhülle aus einem Gewebe aus schwer entflammbaren Polyester-Garnen (Trevira CS®). Bei den Polyestergarnen kann es sich beispielsweise um Polyethylenterephthalat (PET) oder Polybutylenterephthalat (PBT) handeln. Diese können beispielsweise mit dem Fachmann bekannten Flammschutzmitteln behandelt sein, welche beispielsweise in das Garn eingebracht oder auf seine Oberfläche aufgebracht werden.

Die erfindungsgemäße Laserschutzvorrichtung kann beispielsweise als Laserschutzvorhang verwendet werden. Für einen größeren Vorhang wird ein Aufbau in Form von bis zu 1 m breiten Lamellen bevorzugt, die aus dem oben beschriebenen Dreilagenaufbau bestehen und mit einer Überlappung von beispielsweise 10 cm - 30 cm nur an der Ober- und Unterseite miteinander verbunden sind. Zwischen den einzelnen Lamellen bildet sich somit ein isolierender Luftspalt, der einen Wärmestau verhindern soll, wenn der Laserstrahl auf eine Stoßstelle trifft. Das komplette Lamellenpaket kann dann entweder in eine große Schutzhülle eingebracht werden oder die bis zu 1 m breiten Einzelpakete werden in separaten Schutzhüllen eingepackt. Die Aufhängung erfolgt üblicherweise über Ringösen.

Das flexible Flächengebilde der Laserschutzvorrichtung kann auch in Form von Laserschutzdecken oder Bekleidungsstücken oder Teilen von Bekleidungsstücken weiterkonfektioniert werden. Bei den Bekleidungsstücken kann es sich beispielsweise um Handschuhe oder Schürzen handeln. Hierbei sollten Nähgarne, die der Gefahr unterliegen, von einem Laserstrahl getroffen zu werden, hinsichtlich Flammverhalten, aber auch hinsichtlich der Absorption, auf die Laserwellenlänge abgestimmt werden.

Die vorliegende Erfindung stellt eine Laserschutzvorrichtung in Form eines dünnen flexiblen Flächengebildes bereit, welche der Schutzstufe A5 oder besser gegenüber Nd:YAG-Lasern im Dauerstichmodus entspricht und die aus langjährig erprobten Basismaterialien kostengünstig hergestellt werden kann. Die folgenden Beispiele sollen ihre Leistungsmerkmale weiter verdeutlichen.

### Beispiele 1 bis 3

Erfindungsgemäße Laserschutzvorrichtungen, bestehend aus einer Lage Aluminiumfolie der Dicke 30 µm und einer Lage vorgeschrumpften Glasgewebes wurden mit einem Nd:YAG-Festkörperlaser (Hersteller: Rofin) der Leistung 500 W und einem Strahldurchmesser von 5 mm auf der Probe im Dauerstrichmodus mit einer Wellenlänge von 1064 nm bestrahit. Dies entspricht ungefähr der halben Leistung die in der Schutzstufe A6 gefordert wird und ist somit völlig ausreichend für die Schutzstufe A5. Es wurden Glasgewebe mit folgenden Gewichten verwendet:
(Bsp. 1) 600 g/m², (Bsp. 2) 1000 g/m², (Bsp. 3) 1100 g/m²

Jeder Versuch wurde zweimal durchgeführt, wobei einmal die glattere Seite und einmal die rauere Seite des Glasgewebes dem Laser zugewandt wurde.

Alle Versuche wurden nach 120 s abgebrochen, ohne dass es zu einem Versagen der Laserschutzvorrichtung gekommen ist.

### Beispiel 4

Der Versuch aus Beispiel 1 wurde über einen Bestrahlungszeitraum von 4 min wiederholt, wobei die glattere Seite des Gewebes dem Laser zugewandt war.

Es zu keinem Versagen der Laserschutzvorrichtung.

### Beispiele 5 bis 7

Die erfindungsgemäßen Laserschutzvorrichtungen aus den Beispielen 1 bis 3 wurden mit einer Kieselsolausrüstung, welche aus einer wässrigen Lösung kolloidaler Kieselsäure mit einem geringen Anteil einer polymeren, wässrigen Acrylatdispersion besteht, versehen und unter denselben Bedingungen wie in den Beispielen 1 bis 4 bestrahlt.

Auch diese Versuche wurden nach 120 s abgebrochen, ohne dass es zu einem Versagen der Laserschutzvorrichtung gekommen ist. Eine Kieselsolausrüstung ist folglich zur Behandlung der erfindungsgemäßen Laserschutzvorrichtung geeignet.

### Beispiel 8

Die erfindungsgemäße Laserschutzvorrichtung aus Beispiel 1 wurde mit einer Vermiculiteausrüstung, welche aus einer wässrigen Dispersion aus fein gemahlenen Schichtsilikaten, die unter anderem Eisenoxid und Aluminiumoxidin ihrer Zusammensetzung aufweisen, und der geringe Mengen organischer Bindemittel bzw. Dispergierhilfsmittel beigefügt sind, versehen und unter denselben Bedingungen wie in Beispiel 1 bestrahlt. Die Laserschutzvorrichtung wurde sofort zerstört. Eine Vermiculiteausrüstung ist folglich zur Behandlung der erfindungsgemäßen Laserschutzvorrichtung ungeeignet.

### Beispiel 9

Eine erfindungsgemäße Laserschutzvorrichtungen, bestehend aus einer Lage Aluminiumfolie der Dicke 30 µm und einer Lage vorgeschrumpftem Glasgewebe des Gewichts 600 g/cm² wurden mit einem Nd:YAG-Festkörperlaser (Hersteller: Rofin) der Leistung 650 W und einem Strahldurchmesser von 5 mm auf der Probe im Dauerstrichmodus mit einer Wellenlänge von 1064 nm bestrahlt. Der Versuch wurde viermal durchgeführt, wobei dreimal die glattere Seite und einmal die rauere Seite des Glasgewebes dem Laser zugewandt wurde.

Wurde die glattere Seite des Glasgewebes bestrahlt, so versagte die Laserschutzvorrichtung nach 30 s bis 93 s. Bestrahlen der raueren Seite verkürzte die Versagenszeit auf 12 s. Es ist folglich vorteilhaft, wenn die Laserschutzvorrichtung eine möglichst glatte Oberfläche hat.

### Beispiele 10 und 11

Erfindungsgemäße Laserschutzvorrichtungen, bestehend aus einer Lage Aluminiumfolie der Dicke 30 µm und je einer (Bsp. 10) bzw. je zwei (Bsp. 11) Lage(n) vorgeschrumpften Glasgewebes des Gewichts 600 g/cm² wurden mit einem Nd:YAG-Festkörperlaser der Leistung 490 W und einem Strahldurchmesser von 5 mm auf der Probe im Dauerstrichmodus mit einer Wellenlänge von 1064 nm bestrahlt wobei rauere Seite des Glasgewebes dem Laser zugewandt wurde. Die Temperatur des Prüflings wurde auf der vom Laser abgewandten Seite mit einem Pyrometer gemessen.

Die Laserschutzvorrichtung mit zwei Lagen Glasgewebe zeigte eine konstante Temperatur von 510°C, ohne zu versagen. Die Laserschutzvorrichtung mit vier Lagen Glasgewebe wurde sofort zerstört. Die Temperatur stieg auf über 1000°C. Offensichtlich kam es zu einem Wärmestau. Es ist folglich nicht sinnvoll die erfindungsgemäße Laserschutzvorrichtung auf beiden Seiten der Aluminiumfolie mit jeweils mehr als einer Lage Glasgewebe eines so hohen Gewichts zu versehen. Bei wesentlich leichteren Geweben muss dies nicht zwingend der Fall sein.

## Patentansprüche

1. Laserschutzvorrichtung in Form eines flexiblen Flächengebildes, welche mindestens der Schutzstufe A5 gemäß der Europäischen Norm EN 12254:1998 gegenüber Laserstrahlung der Wellenlänge 1064 nm im Dauerstrichmodus genügt, enthaltend einen Mehrschichtverbund aus:
- einer ersten Schicht, umfassend mindestens eine Aluminiumfolienlage, sowie
- wenigstens einer weiteren, zu der ersten Schicht benachbarten Schicht aus wenigstens einer Lage aus Silikatfaser-Glasgewebe und/oder Silikatfaser-Glasvlies und/oder Silikatfaser-Glaspapier,
wobei die erste Schicht auf der dem Laser abgewandten Seite angeordnet ist, falls nur eine einzige Schicht aus wenigstens einer Lage aus Silikatfaser-Glasgewebe und/oder Silikatfaser-Glasvlies und/oder Silikatfaser-Glaspapier im Mehrschichtverbund vorhanden ist.

2. Laserschutzvorrichtung nach Anspruch 1, **dadurch gekennzeichnet, dass** das Silikatfaser-Glasgewebe und/oder Silikatfaser-Glasvlies und/oder Silikatfaser-Glaspapier vorgeschrumpft ist.

3. Laserschutzvorrichtung nach Anspruch 2, **dadurch gekennzeichnet, dass** die wenigstens eine weitere Schicht formschlüssig auf der Aluminiumfolie aufgebracht ist.

4. Laserschutzvorrichtung nach Anspruch 2 oder 3, **dadurch gekennzeichnet, dass** die Schicht, welche mindestens eine Lage Aluminiumfolien enthält, auf beiden Seiten je eine Lage aus vorgeschrumpftem Material aufweist.

5. Laserschutzvorrichtung nach einem der Ansprüche 2 bis 4, **dadurch gekennzeichnet, dass** die Lagen der Aluminiumfolie und des vorgeschrumpften Materials nur an den Außenrändern miteinander verbunden sind.

6. Laserschutzvorrichtung nach einem der Ansprüche 1 bis 5, **dadurch gekennzeichnet, dass** die Oberfläche der Aluminiumfolie genarbt ist.

7. Laserschutzvorrichtung nach einem der Ansprüche 1 bis 6, **dadurch gekennzeichnet, dass** die Aluminiumfolie eine Dicke von 10 bis 100 µm aufweist.

8. Laserschutzvorrichtung nach Anspruch 7, **dadurch gekennzeichnet, dass** die Aluminiumfolie eine Dicke von 20 bis 30 µm aufweist.

9. Laserschutzvorrichtung nach einem der Ansprüche 2 bis 8, **dadurch gekennzeichnet, dass** das vorgeschrumpfte Material zu 100 % aus Silikatfasern besteht, die durch eine chemisch Behandlung erhalten werden.

10. Laserschutzvorrichtung nach einem der Ansprüche 2 bis 9, **dadurch gekennzeichnet, dass** das vorgeschrumpfte Material ein Gewicht von 50 bis 1500 g/m² aufweist.

11. Laserschutzvorrichtung nach Anspruch 10, **dadurch gekennzeichnet, dass** das vorgeschrumpfte Material ein Gewicht von 600 bis 1100 g/m² aufweist.

12. Laserschutzvorrichtung nach einem der Ansprüche 2 bis 11, **dadurch gekennzeichnet, dass** das vorgeschrumpfte Glasgewebe, eine möglichst blickdichte Bindung aufweist.

13. Laserschutzvorrichtung nach Anspruch 12, **dadurch gekennzeichnet, dass** das vorgeschrumpfte Glasgewebe, eine Atlasbindung aufweist.

14. Laserschutzvorrichtung nach einem der Ansprüche 2 bis 13, **dadurch gekennzeichnet, dass** sie eine Ausrüstung des vorgeschrumpften Materials zur Verbesserung der Schnittfestigkeit enthält.

15. Laserschutzvorrichtung nach Anspruch 14, **dadurch gekennzeichnet, dass** die Ausrüstung des vorgeschrumpften Materials zur Verbesserung der Schnittfestigkeit eine Ausrüstung auf Basis von Kieselsol ist.

16. Laserschutzvorrichtung nach einem der Ansprüche 1 bis 15, **dadurch gekennzeichnet, dass** sie durch eine schwer entflammbare Schutzhülle gegen Verschmutzung geschützt ist.

17. Laserschutzvorrichtung nach Anspruch 16, **dadurch gekennzeichnet, dass** die Schutzhülle aus einem Gewebe aus schwer entflammbaren Polyester-Garnen besteht.

18. Laserschutzvorrichtung nach Anspruch 17, **dadurch gekennzeichnet, dass** die schwer entflammbaren Polyester-Garne durch Behandeln von Polyestergarnen mit Flammschutzmitteln erhalten wurden.

19. Laserschutzvorrichtung nach einem der Ansprüche 1 bis 18, **dadurch gekennzeichnet, dass** das flexible Flächengebilde in Form von Laserschutzdecken oder Bekleidungsstücken oder Teilen von Bekleidungsstücken weiterkonfektioniert ist.

20. Laserschutzvorrichtung nach Anspruch 19, **dadurch gekennzeichnet, dass** es sich bei den bezeichneten Bekleidungsstücken um Handschuhe oder Schürzen handelt.

## Claims

1. Laser protection device in the shape of a flexible plain-structure, which at least meets protection level A5 according to the European norm EN 12254:1998 under laser irradiation of the wavelength 1064 nm in continuous wave mode, including a multi-layer composite of:
- a first layer, comprising at least one layer of aluminum foil, and
- at least one additional layer made of at least one layer of silicate fiber glass fabric and/or silicate fiber glass mat and/or silicate fiber glass paper, which is adjacent to the first layer,
wherein the first layer is arranged on the far side of the laser, if only one single layer made of at least one layer of silicate fiber glass fabric and/or silicate fiber glass mat and/or silicate fiber glass paper is present in the multi-layer composite.

2. Laser protection device according to claim 1, **characterized in that** the silicate fiber glass fabric and/or silicate fiber glass mat and/or silicate fiber glass paper is pre-shrinked.

3. Laser protection device according to claim 2, **characterized in that** the at least on additional layer is applied with positive fitting on the aluminum foil.

4. Laser protection device according to claim 2 or 3, **characterized in that** the layer, which includes at least one layer of aluminum foils, has at least one layer of pre-shrinked material on both sides.

5. Laser protection device according to any of claims 2 to 4, **characterized in that** the layers of aluminum foil and of pre-shrinked material are connected to each other only at their outer edges.

6. Laser protection device according to any of claims 1 to 5, **characterized in that** the surface of the aluminum foil is grained.

7. Laser protection device according to any of claims 1 to 6, **characterized in that** the aluminum foil has a thickness from 10 to 100 µm

8. Laser protection device according to any of claim 7, **characterized in that** the aluminum foil has a thickness from 20 to 30 µm.

9. Laser protection device according to any of claims 2 to 8, **characterized in that** the pre-shrinked material consists of 100 % silicate fibers that were obtained by a chemical treatment.

10. Laser protection device according to any of claims 2 to 9, **characterized in that** the pre-shrinked material has a weight of 50 to 1500 g/m³.

11. Laser protection device according to any of claim 10, **characterized in that** the pre-shrinked material has a weight of 600 to 1100 g/m³.

12. Laser protection device according to any of claims 2 to 11, **characterized in that** the pre-shrinked material has a weave being as opaque as possible.

13. Laser protection device according to claim 12, **characterized in that** the pre-shrinked material has a satin weave.

14. Laser protection device according to any of claims 2 to 13, **characterized in that** it includes an equipment of the pre-shrinked material for improving cut resistance.

15. Laser protection device according to claim 14, **characterized in that** the equipment of the pre-shrinked material for improving cut resistance is an equipment based on silica sol.

16. Laser protection device according to any of claims 1 to 15, **characterized in that** it is protected against dirt by a flame resistant protective cover.

17. Laser protection device according to claim 16, **characterized in that** the protective cover consists of a fabric of flame resistant polyester yarns.

18. Laser protection device according to claim 17, **characterized in that** the flame resistant polyester yarns have been obtained by treating of polyester yarns with flame retardants.

19. Laser protection device according to any of claims 1 to 18, **characterized in that** the flexible plain-structure is further tailored in the shape of laser protection covers or clothing or parts of clothing.

20. Laser protection device according to claim 19, **characterized in that** said pieces of clothing are gloves or pinafores.

## Revendications

1. Dispositif de protection laser en forme d'une structure bidimensionnelle flexible fournissant un niveau de protection d'au moins A5 selon la norme européenne 12254:1998 contre un rayonnement laser d'une longueur d'onde de 1064 nm à émission en onde continue, contenant un matériau composite multicouche composé
- d'une première couche, comprenant au moins un pli d'une feuille en aluminium, ainsi que
- d'au moins une autre couche adjacente à la première couche, constituée d'au moins un pli d'un tissu de fibres en verre silicate et/ou d'un non-tissé de fibres en verre silicate et/ou d'un papier composé de fibres en verre silicate,
la première couche étant disposée sur le côté opposé à l'impact du laser, s'il le matériau composite multicouche ne comprend qu'une seule couche constituée d'au moins un pli d'un tissu de fibres en verre silicate et/ou d'un non-tissé de fibres en verre silicate et/ou d'un papier composé de fibres en verre silicate.

2. Dispositif de protection laser selon la revendication 1, **caractérisé en ce que** le tissu de fibres en verre silicate et/ou le non-tissé de fibres en verre silicate et/ou le papier composé de fibres en verre silicate est/sont prérétréci(s).

3. Dispositif de protection laser selon la revendication 2, **caractérisé en ce que** l'au moins une autre couche est appliquée sur la feuille en aluminium de façon à épouser la forme de cette dernière.

4. Dispositif de protection laser selon les revendications 2 ou 3, **caractérisé en ce que** la couche contenant au moins un pli d'une feuille en aluminium présente sur chacune de ses deux faces un pli constitué d'un matériau prérétréci.

5. Dispositif de protection laser selon l'une des revendications 2 à 4, **caractérisé en ce que** les plis de la feuille en aluminium et du matériau prérétréci ne sont liés l'un à l'autre que sur leurs bords extérieurs.

6. Dispositif de protection laser selon l'une des revendications 1 à 5, **caractérisé en ce que** la surface de la feuille en aluminium présente des irrégularités ponctuelles.

7. Dispositif de protection laser selon l'une des revendications 1 à 6, **caractérisé en ce que** la feuille en aluminium présente une épaisseur comprise entre 10 et 100 µm.

8. Dispositif de protection laser selon la revendications 7, **caractérisé en ce que** la feuille en aluminium présente une épaisseur comprise entre 20 et 30 µm.

9. Dispositif de protection laser selon l'une des revendications 2 à 8, **caractérisé en ce que** le matériau prérétréci est constitué à 100 % de fibres de silicate, lesdites fibres étant obtenues par un traitement chimique.

10. Dispositif de protection laser selon l'une des revendications 2 à 9, **caractérisé en ce que** le matériau prérétréci présente un poids compris entre 50 et 1500 g/m²_{.}

11. Dispositif de protection laser selon la revendication 10, **caractérisé en ce que** le matériau prérétréci présente un poids compris entre 600 et 1100 g/m².

12. Dispositif de protection laser selon l'une des revendications 2 à 11, **caractérisé en ce que** le tissu de fibres en verre prérétréci présente une armure lui conférant une opacité maximale.

13. Dispositif de protection laser selon la revendication 12, **caractérisé en ce que** le tissu de fibres en verre prérétréci présente une armure satin.

14. Dispositif de protection laser selon l'une des revendications 2 à 13, **caractérisé en ce qu'**il contient un apprêt du matériau prérétréci, ledit apprêt étant destiné à améliorer la résistance à la découpe.

15. Dispositif de protection laser selon la revendication 14, **caractérisé en ce que** l'apprêt du matériau prérétréci, qui est destiné à améliorer la résistance à la découpe, est un apprêt à base de sol de silice.

16. Dispositif de protection laser selon l'une des revendications 1 à 15, **caractérisé en ce qu'**il est protégé contre les salissures par une gaine ignifuge.

17. Dispositif de protection laser selon la revendication 16, **caractérisé en ce que** la gaine est constituée d'un tissu de fils ignifuges en polyester.

18. Dispositif de protection laser selon la revendication 17, **caractérisé en ce que** les fils ignifuges en polyester ont été obtenus en traitant des fils en polyester avec des agents ignifuges.

19. Dispositif de protection laser selon l'une des revendications 1 à 18, **caractérisé en ce que** la structure bidimensionnelle flexible a été confectionnée ultérieurement pour prendre la forme de couvertures de protection laser ou de vêtements ou de parties de vêtements.

20. Dispositif de protection laser selon la revendication 19, **caractérisé en ce que** lesdits vêtements sont des gants ou des tabliers.
